# EUROPEAN PATENT SPECIFICATION

(11) **EP 2 003 838 B1**
(45) Date of publication and mention of the grant of the patent: **26.09.2018**
(21) Application number: 07011626.4
(22) Date of filing: 13.06.2007
(51) Int. Cl.: H04L 29/06

(54) **Distributed access manager**
Manager für verteilten Zugriff
Gestionnaire d'accès distribué

(43) Date of publication of application: 17.12.2008
(73) Proprietor: Nokia Solutions and Networks Oy, 02610 Espoo (FI)
(72) Inventor: Andrade, Elvio, 2820-235 Chameca de Caparica (PT); Arsenio, Artur, 2775 Carcavelos (PT); Ferreira, Herve, 2695-285 Portela de Azoia (PT)
(74) Representative: Borgström, Markus

(56) References cited:
- US-A1- 2007 044 146
- US-A1- 2007 220 430

## Description

### Field of invention

The present invention relates to the field of providing services. In particular, the present invention relates to a method of operating a distributed session management system.

### Art Background

In the publication WO 2005/111995 A, a content presenting device, method, and program are described allowing a user to select his/her desired music data easily, wherein a database registration readout control module detects an album name of music data corresponding to a retrieval key from a hard disk, a compact disk playback control module and a mini disk playback control module also detect an album name of music data corresponding to a retrieval key from a compact disk and a mini disk, respectively.

In the publication US 2007/044146 A1, an authentication method, system, and server are described, according to which a user authentication processing is performed and an authentication session ID is returned to a terminal, an authentication server issues and stores an authentication ticket, the authentication ticket and authentication session are returned to the terminal, and a user transmits a request of service provision and the authentication ticket to a service provider's server.

With an increasing speed of internet access, the number of services increases rapidly. Security is of extreme importance for offering new services to end-users. Hence service delivery frameworks, e.g. platforms sold to operators to offer Smart Home/Building services allowing control from a central control unit or remote over a network, Home Entertainment Services offering solutions for Multimedia, voice over IP, etc, or any other services, have to carefully manage all sessions opened on the system, as well as to impose severe access constraints to services deployed according to the entity level of access and/or security of services subscribed. However authenticating a client to several services or service providers reduces the comfort for a user.

There may be a need for a user-friendly and easy to use distributed session management system that provides a necessary security level.

### Summary of the Invention

This need is met by the subject matter according to the independent claims. Advantageous embodiments of the present invention are described by the dependent claims.

The term "service component" may include only part of a service that is accessible by the client or may include a whole service accessible by the client. In other words, a service may consist of one service component or may consist of two or more service components.

The term "service" includes any arbitrary service, e.g. providing data, providing access to data, providing information, etc. A service may be a streaming service, e.g. a data stream of a television channel received via a multicast connection or a broadcast connection. Further, a service may be an interactive service, e.g. provided via a unicast connection. A service may be a service provided locally, e.g. within a local network such as a local area network (LAN), a wireless local area network (WLAN), by a Bluetooth connection, etc. Further, a service may be a service provided over a non-local network such as over internet, telecommunication networks, etc.

For example, one subsystem may provide only a single service. Or a subsystem may provide two or more services. A "subsystem" may be any system providing a service, e.g. one of the above mentioned services. In particular, the subsystem may contain application services that can be accessed by the client.

A service may be executed locally, e.g. in a local subsystem. Further, a service may be executed over a network (non-locally), e.g. in a remote subsystem. Further, a service may be a hybrid service, a service component of which is executed in a local subsystem and another service component of which is executed in a non-local subsystem.
A service accessible by the client may be any service which in principle can be accessed by the client but for which the client needs to authenticate. Such an accessible service may be e.g. a service subscribed by the client.

The term "authentication information" includes any information or data suitable to authenticate a client. For example, the authentication information may be a user-ID, a user-ID and a user-password, a security certificate, etc. Further, an "authentication information" may be an information representative of the fact that a client has been successfully authenticated by a system component, e.g. one of the at least two session managers.

The authentication information may be provided to one of the session managers by the client itself. According to other examples, the authentication information may be provided by a system component certifying that the client has been successfully authenticated, etc.

A "service-session ID" may be any data or data portion providing an appropriate level of identity, e.g. a key of appropriate length, e.g. 1024 Bit, a certificate, etc. A service session ID may be any "ticket" granting access to a particular service.

A client may be for example any kind of user interface application, such as a rich client application, a portal, an end user device, but may also be a service provider, or any other device or system which intends to access another device or system.

For example all service-session-ID's for all of the services accessible by the client may be distributed to all subsystems. According to other examples, only service-session ID's for services which are provided by a particular subsystem are provided to this subsystem. The service-session ID's may be provided to the respective subsystem immediately upon generation of the service-session ID's. According to other examples, the service-session ID's are provided to the respective subsystem upon request by the subsystem or another system component, e.g. the client. According to an example, the service-session ID' generated by the session manager are automatically provided to the client upon generation of the service-session ID's. According to other examples, the service-session ID's are not automatically provided to the client. For example, the service-session ID's may be provided to the client upon a respective request.

In this application, the term "providing" includes transmitting or allowing for accessing. For example, "providing service-session ID's to the client" includes transmitting the service-session ID's to the client as well as allowing the client to access the service-session ID's.

According to an example the service-session ID's are stored and, upon request of a particular service by a client, the service-session ID corresponding to the particular service to the client is transferred. An advantage thereof is that the client does not need to store several service-session ID's. Further, the client does not need to manage the service-session ID's and select the right service-session ID for a particular service.

According to another example the service-session ID's are stored and, upon request of a particular service by the client, the service-session ID corresponding to the particular service to the client and to the subsystem corresponding to, e.g. offering, the particular service is transferred. An advantage thereof is that neither the client nor does the subsystem need to manage service-session ID's. Rather, if a client connects to the respective subsystem, the subsystem may authenticate the client by verifying, e.g. comparing the service-session ID's for the requested service.

According to other examples, the service session ID's are only provided to the client, either automatically upon generation or upon a respective request. Such a request may be but is not necessarily submitted by the client. In such an embodiment, the client, for accessing a particular service of a subsystem, may provide the respective service-session ID corresponding to the particular service to the subsystem which may in response hereto call the session manager for authenticating the service-session ID received from the client.

For example, the respective session manager may determine the IP address of the client and provide the IP address to the subsystem. According to another example, the session manager determines the IP address of the client, creates a connection key pass including the IP address of the client, and returns the connection key pass to the subsystem.

According to another example at least one of the session managers generates a session ID usable by the client for authentication in the session manager. Using the session ID, the client may be authenticated by the session manager independently of a particular service or a particular service-session ID.

According to another example at least one of the session managers is a backend session manager of a backend of a service system. A backend can be for example a system that contains the core services, e.g. subscription, session management, etc., of a system.

According to another example, a list of service components is received which comprises at least two service components accessible by the client. Further one of said service-session ID's is generated for at least one service component of each service of said list of service components. Since a service may comprise a single service component or may comprise two or more service components, the list of service components may include components of multi-component services, i.e. parts of services, or may include components of single-component services, i.e. whole services. For example, the service-session ID's for each service component of each service of the list of services are generated. The list of services may be retrieved from a storage of the session managers, from the subsystems, from a data base, etc..

According to another example, a request of a client for a service is received and the list of service components accessible by the client is received. According to this example, the client may request a particular service and the session manager, in response hereto, may request the complete list of services accessible by the client and may generate service session ID's for all the services accessible by the client.

According to a further example a distributed session management system comprises at least two session managers each of which is configured for generating a client-related service-session ID for each of at least one services component of at least one service accessible by a client in response to an authentication information. Each session manager comprises an input interface for receiving authentication information of a client and an output interface for outputting the at least one service-session ID to said client.

According to another example a client comprises an interface for providing authentication information and an interface for receiving at least one service-session ID for respective services accessible by the client from each of at least two session managers in response to providing said authentication information.

According to an example, the client further comprises a user interface allowing a user to select a particular service out of the accessible services and further comprises an ID selector automatically selecting at least one service-session ID corresponding to the selected particular service.

As already mentioned before, "providing" includes "transmitting, allowing to access, etc.". Hence interface for providing authentication information may be an interface for transmitting authentication information. Further, the interface for providing authentication information may be an interface for allowing for accessing authentication information.

According to a further example there is provided a subsystem comprising a service execution component for providing at least one service component, an interface for receiving a service-session ID of a client for one of the at least one service components provided by the subsystem, a interface for requesting a session-manager to authenticate the service-session ID of the client, a interface for receiving an authentication result from the session manager, and an access granting component allowing or refusing the client to access the subsystem depending on the authentication result.

The service-session ID of the client may be provided by the client or another entity, e.g. the session manager.

Having regard to the various examples mentioned above, according to an example of the invention, at least two service components are provided by at least two different subsystems. For example, at least two service components of one hybrid service may be provided by two or more different subsystems.

A service or the component of the service that a session manager A manages may be in the same subsystem, e.g. in a service gateway, or in another subsystem. The session manager B that generates the service session ID might be different from a session manager that synchronizes this info to session manager A, which then stores this info and manages the access to services. Hence, these are several possible cases. The idea is that multiple session managers will then be responsible by managing a set of services and/or components of services.

A person skilled in the art will gather from the above and the following description that, unless other notified, in addition to any combination of features belonging to one type of subject matter also any combination between features relating to different subject matters, in particular between features of the apparatus type claims and features of the method type claims is considered to be disclosed with this application.

### Brief Description of the Drawings

Figure 1 schematically shows in part a service system in accordance with an example of the invention;
Figure 2 schematically shows in part a service system in accordance with another example of the invention;
Figure 3 schematically shows a service system in accordance with an embodiment of the invention.

### Detailed Description

The illustration in the drawings is schematic. It is noted that in different figures, similar or identical elements are provided with the same reference signs or with reference signs, which are different from the corresponding reference signs only within the first digit.

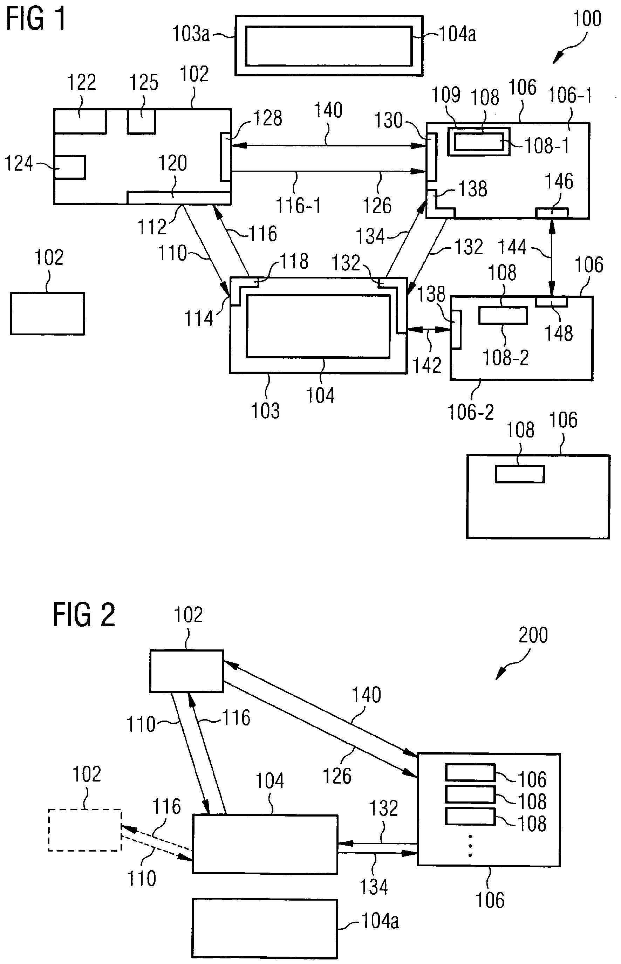

Figure 1 shows an example of a service system 100 according to the invention. The service system 100 includes at least one client 102, two of which are shown in Fig. 1, at least two session manager devices 103, 103a each having a session manager 104, 104a, and at least one subsystem 106, e.g. service provider, three of which are shown in Fig. 1. Each subsystem 106 may provide at least one service 108, e.g. health care services, video on demand, internet protocol television (IPTV), etc. To this end, the each subsystem may comprise a service execution component 109 which upon execution provides the respective service 108. In Fig. 1 only the service execution component 109 of one service 108-1 has been exemplarily depicted. It should be understood that according to an example each service is provided by a respective service execution component.

Users, having subscribed several packages of services in different subsystems, need to access the functionalities that are presented by the different systems in a flexible, easy manner. It is not pleasant for a user to have to sign in multiple times, e.g. once per subsystem, to take advantage of the functionalities offered by each system.

Hence, it would be of advantage to merge several services and present them together. This requires that the system that merges the services must invoke functionalities of the subsystems. As conventionally each subsystem requires authentication, according to the invention, a single sign-on mechanism should be used. The goal of this process is to propose a single sign on mechanism with session management in particular between distributed subsystems. In addition, since access can be made at multiple points, management of this process needs to be as well distributed, i.e. at least two session managers are provided.

In the example illustrated in Fig. 1, the client 102 initiates a service access process by providing authentication 110 information such as a user name and a password to the a respective session manager 104 managing at least a service component of a desired service. To this end, the client 102 comprises an interface 112 for providing the authentication information 110. The session manager device 103 comprises an interface 114 for receiving the authentication information 110. In response to the received authentication information 110, the session manager 104 automatically generates a client-related service-session ID for each client accessible service component which is managed by the service manager 104. In the illustrated example, each of the subsystems 106 may provide to session manager 104 for each user a list 111 of services provided by the subsystem 106 and accessible by the client 102. The list of services provided by the subsystem 106 may be updated each time the user changes the accessible services e.g. by subscribing or unsub-scribing. According to other examples, the session manager 104 may request such a list of accessible services from all available subsystems each time the client logs in, i.e. each time the client provides authentication information 110.

According to the illustrated example, the session manager 104 transmits the service-session ID's 116 for the respective services to the client 102. To this end, the session manager device 103 comprises an interface 118 for transmitting the service-session ID's 116. Further, the client comprises an interface 120 for receiving the service-session ID's. The client 102 further comprises a storage 122 for storing the service session ID's.

Although detailed operation has been described only with regard to the session manager 104 provided by the session manager device 103, it should be understood that the same operations may be performed by any of the at least two session managers of the system 100, two of which 104, 104a are shown in Fig. 1.

The client 102 further comprises a user interface 124 by which a user can select a particular service provided by at least one of the subsystems 106 and managed by at least one of the session managers 104, 104a, e.g. the service 108-1 in the illustrated example. The client further comprises an ID selector 125 for automatically selecting the service-session ID 116-1 corresponding to the selected particular service 108-1.

Upon selection of a particular service 108-1 by the user, the client requests this service from the respective subsystem, e.g. the subsystem 106-1 in the illustrated example by sending a request 126 to the respective subsystem 106-1. The request 126 contains the respective service session ID 116-1 for the service 108-1, e.g. in its header. For communicating with the subsystem 106-1, the client 102 comprises a subsystem communication interface 128. Similarly, each subsystem 106, 106-1 comprises a client communication interface 130.

Upon reception of the user request 126 for the service 108-1, the subsystem 106-1 calls the session manager 104 for authenticating the respective service-session ID 116-1. For example, the subsystem 106-1 may send a respective authentication request 132 including the service-session ID 116-1 to the session manager 104. The service session manager 104 checks authenticity of the service-session ID 116-1 and upon positive check provides a positive authentication result 134 to the subsystem 106-1. Upon negative check, the service-session manager 104 provides a negative authentication result 134 to the subsystem 106-1.

For communicating with the subsystem 106-1, the session manager 104 comprises a subsystem communication interface 136. Similarly, each subsystem 106, 106-1 comprises a session manager communication interface 138.

Upon reception of the positive authentication result 134, the subsystem 106-1 provides the desired service 108-1 to the client 102 via a connection 140. To this end, the subsystem 106, 106-1 may comprise a access granting component 142 which may decide to provide the desired service 108-1 to the client 102 or not, depending on the authentication result 134.

Since each service uses a different service-session ID, if a service-session ID of a service component is compromised, it will not compromise other subsystems or other services.

Although connections and data flows of only one client 102 and only one subsystem 106-1 has been described with regard to Fig. 1, it should be understood that according to an example two or more clients 102 can access the same subsystem 106. Further one client may access two or more subsystems, even if they are managed by different session managers 104, 104a. Since the client 102 receives all service-session ID's necessary to access any of the accessible services 108, the client 102 does not need to authenticate for a second time when accessing one of the available services.

According to an example, a session manager 104 may deliver a service session ID to a subsystem besides delivering to a client 102 as follows. For instance, the session manager 104 might send to a second subsystem 106-2 the service session ID 116-1 of a service 108-1 running on a first subsystem 106-1. To this end, the second subsystem comprises a communication interface 138 for establishing a communication link 142 with the communication interface 132 of the session manager 104. Hence, a service 108-2 running on the second subsystem 106-2 might ask the first subsystem 106-1 for an access to the service 108-1 via a inter-subsystem communication link 144 established between respective interfaces 146, 148 of the first subsystem 106-1 and the second subsystem 106-2. The first subsystem 106-1 will then ask the respective session manager 104 if the service session ID received is allowed. If so, then access from the service 108-2, running on the second subsystem 106-2, to the subsystem 108-1 running on the first subsystem 106-1 is allowed.

The system 100 may provide a logout scheme. For example the client 102 may provide a logout command to at least one of session manager 104. In this case, the respective session manager 104 performs a log-out of the client 102, i.e. closes respective session(s) of the client 102. The logout command may be provided to all session managers 104, 104a managing at least one service component accessible by the client 102. According to other examples, the client may be configured for providing the logout command only to selected ones of the session managers managing at least one service component accessible by the client, e.g. upon a user request.

Further the session manager 104 may perform a logout as described above when an error or a time-out occurs. For example, a timeout process may be implemented in each of the session managers 104, 104a. This timeout process associates a predetermined time period to each session-ID. If the time is not refreshed after an inactivity time and the last refresh lies back longer than the predetermined time period, the respective session is closed by the corresponding session manager.

According to an example, the logout process involves the deletion of the data associated to the session ID in the session manager 104. It also involves closing the open connections belonging to the session ID. According to another example, instead of a deletion, the data associated with the session ID are marked as invalid.

The service system 200 shown in Fig. 2 differs from the service system 100 shown in Fig. 1 in that the system 200 comprises only one subsystem 106, the subsystem 106 providing a plurality of services 108, three of which are shown in Fig. 2. Each of the services 108 requires authentication of an accessing client 102, which is performed as described in detail with regard to Fig. 1 and is not repeated here.

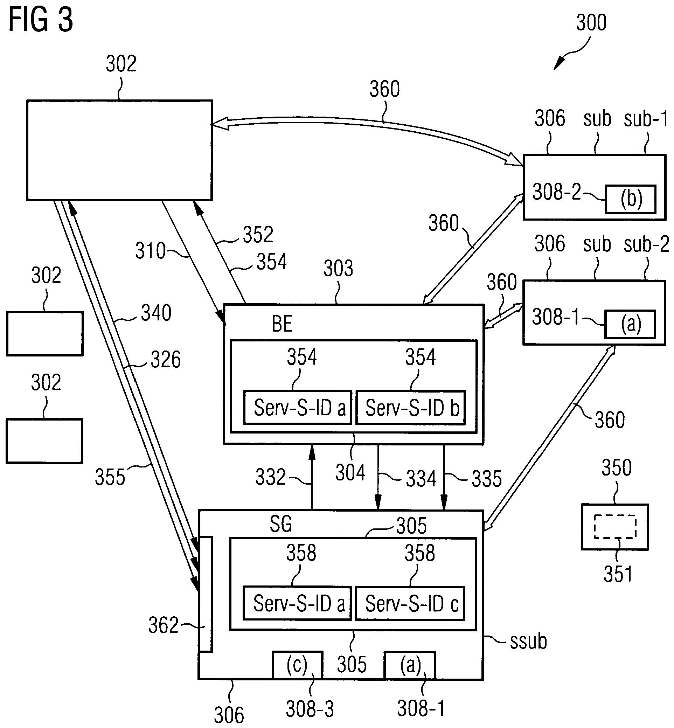

Fig. 3 shows an embodiment of a service system 300. According to the embodiment shown in Fig. 3, a distributed access manager solution is provided in which session are managed through a central component at a backend's middleware and several embedded components deployed on home set-top boxes.

The system 300 comprises one or more clients 302, three of which are shown in Fig. 3. A backend (BE) 303, e.g. a backend middleware, is provided, comprising a backend session manager 304. The backend 303 may contain the core services of the system, e.g. subscription, session management, etc. For example, the backend 303 may be a middleware component on a telephone operator's infra structure.

The system 300 further comprises subsystems 306 of two different types. A first type, subsystems Sub, contain application services that can be accessed by a client 302. A first subsystem Sub-1 executes a service (b) 308-2 on it. A second subsystem Sub-2 executes part of a hybrid service (a) 308-1 on it. A second type, smart subsystems SSub also contain application services that can be accessed by the client. Further, the smart subsystem SSub performs session management for the services that run on it. In the illustrated embodiment, the smart subsystem SSub is service gateway (SG) which executes a service (c) 308-3 on it. Further, the smart subsystems SSub executes the other part of the hybrid service (a) 308-1 on it.

In the illustrated embodiment, although not restricted hereto, the service gateway SG is a service gateway that interconnects the backend 303 and one or more home devices, e.g. a set-top box 350.

As follows from the above, the services that can be accessed by the client are executed in different locations. The summary given below belongs to the embodiment illustrated in Fig. 3 and should not be considered as limiting:
Local services are executed in the SSub systems. Network services are executed in the Sub systems. Hybrid services are executed in the Sub and SSub systems.

Herein the terms "local" and "network" refer to the illustrated embodiment, in particular, a local service is a service which is executed on the home side, e.g. on the service gateway, and a network service is a service that is executed on a beyond the home side, e.g. beyond the service gateway on a telephone operators infrastructure.

In the illustrated embodiment, the client 302 is a remote device, e.g. a cellular. However, the client 302 may be a portal or a rich client application, etc.

Services are accessed by the clients 302 through an initial login, i.e. by providing authentication information 310 to the backend session manager 304. This login creates a backend-session ID 352 and at least one backend-service-session ID 354, one for each service that the client 302 can access everywhere outside home, i.e. hybrid and network services sub-1, sub-2. The backend-session ID 352 is used to by the client 302 for authentication in the backend 303 and the backend-service-session ID 354 is used to authenticate the client 302 in the subsystems sub-1, sub-2.

The client 302, e.g. a service provider or a user via a remote device, can establish a remote connection to the smart subsystem SSub using a backend functionality. This involves getting the IP address of the client, create a connection key pass and return it to the smart subsystem SSub. With this information the smart subsystem SSub can manage its firewall 362 and open a port to a specific IP address, the IP address of the client.

In particular, upon login of the client 302 at the backend 303, the backend-session manager 304 gets the IP address of the client 302 to generate a key pass 335 which is provided to the smart subsystem SSub. The IP address may be available from the authentication information 310 provided by the client to the session manager 304 or may be retrieved from a respective source, e.g. the client 302 itself. The session manager 304 then provides the key pass 335 to the smart subsystem SSub.

Upon reception of the key pass 335, the smart subsystem SSub opens a port for the client IP address in its firewall to allow the client 302 to access the smart subsystem SSub.

After the login at the backend 303, the client 302 establishes another login 355 to the smart subsystem SSub. The smart subsystem SSub comprises a smart subsystem session manager 305 which will then create another SSub-session ID 356, used to authenticate the client calls to the smart subsystem SSub, and SSub-service-session ID's 358 for each service 308-1, 308-3 running in the smart subsystem SSub and accessible by the client 302. The smart subsystem SSub will then return the SSub-service-session ID's 358 to the client 302.

In this sense, the smart subsystem SSub may be regarded as a session manager device and the SSub-session manager 305 may be regarded as a session manager as discussed with regard to Fig. 1. In this sense, the key pass 335 is an example of authentication information.

Upon selection of a particular service, e.g. the local service (c) 308-3 of the smart subsystem SSub by the user, the client 302 requests this service 308-3 from the respective subsystem, i.e. from the smart subsystem SSub in the illustrated embodiment by sending a request 326 to the respective subsystem SSub. The request 326 contains the respective SSub-service-session ID 358 for the service 308-3, e.g. in its header.

Upon reception of the user request 326 for the service 308-3, the smart subsystem SSub calls the session manager 304 for authenticating the respective service-session ID 358. For example, the smart subsystem SSub may send a respective authentication request 332 including the service-session ID 358 to the session manager 304. The service session manager 304 checks authenticity of the service-session ID 358 and upon positive check provides a positive authentication result 334 to the smart subsystem SSub. Upon negative check, the service-session manager 104 provides a negative authentication result 334 to the smart subsystem SSub.

According to another embodiment, the smart subsystem session manager 305 may do the authenticity check. Accordingly, no calls to the session manager 304 are made by the smart subsystem session manager 305 in this case.

Upon reception of a positive authentication result 334, the smart subsystem SSub provides the desired service 308-3 to the client 302 via a connection 340. Although the connection 340 has been indicated as bidirectional connection in Fig. 3, the connection 340 may be a unidirectional connection.

Establishing connections with the regular subsystems sub-1, sub-2 in Fig. 3 may be performed via involving the backend 303 as service-session ID authentication device as described with regard to Fig. 1 and is not repeated here. The authentication of the service-session ID of a hybrid service has to be performed on only one of the entities on which the service is partially executed. For example, the hybrid service (a) 308-1 of the subsystem sub-2 may be authenticated by either the backend 303 or the service gateway SSub. According to other embodiments, the authentication of the service-session ID of a hybrid service has to be performed on all entities on which the service is partially executed.

Although the connections and communications of the entities of Fig. 1 have been described involving individual interfaces, it should be understood that the respective connections and communications may be performed over a single physical interface. Further, although connections of entities of Fig. 1 and 2 and in part of Fig. 3 have been described involving individual connections, a single physical connection between two respective entities may be provided, indicated in part by the broad arrows 360 in Fig. 3. Vice versa, any communication link between two entities may involve one or more individual sub interfaces and sub links for sending or receiving different kinds of information, e.g. requests, answers, etc.

A subsystem, e.g. the subsystem sub-1 may also establish a connection to the smart subsystem SSub. To this end, the subsystem sub-1 first calls the backend 303 to initiate a remote connection into the SSub. Similar to establishment of the connection 340 between the client and the smart subsystem SSub, the backend gets the IP address of the subsystem and creates a SGSession ID. The backend 303 calls the smart subsystem SSub, sending the SGSession ID as well, and notifies that a subsystem requires a connection establishment. The backend 303 may also send the IP address of the subsystem sub-1 to the smart subsystem SSub, and the smart subsystem SSub in response hereto, opens a port in its firewall to allow the subsystem sub-1 to access the smart subsystem SSub. Thereafter, the client 302 can establish a connection into the smart subsystem SSub as described above with regard to the establishment of the connection 140 of the client 102 to the subsystem 106-1 of the service system 100.

Sessions may require synchronization. According to an embodiment, sessions are synchronized in two different places:
First, the client can perform the login at the backend 303 and in one or more smart subsystems SSub. In this case, the client is responsible for using the session ID's in the right actions. To this end, the client may comprise a storage for storing session ID's of one or more smart subsystems and a session-ID manager for selecting the correct session ID for a desired connection to a smart subsystem SSub offering a desired service.

Second, the one or more smart subsystems SSub can synchronize the session ID's of the backend as well as of the smart subsystem directly with the backend 303. Hence, the backend 303 and the at least one smart subsystem SSub have the same values.

A logout may occur either by explicit user command, e.g. submitted from the client or due to a session timeout as discussed with regard to Fig. 1. Regarding the session time-out, the timeout process may be implemented in the backend 303. For example, a predetermined timeout period is associated to each backend-session ID in the backend, and to the SSub-session ID for the smart subsystem SSub services. As described with regard to Fig. 1, if the time is not refreshed after an inactivity time, the respective session is closed.

In the illustrated embodiment, the logout process involves the deletion of the data associated with the session ID in the backend and in the smart subsystem SSub. It also involves the closure of the connections previously opened by the init remote connection process, i.e. by the login process described above.

A refresh of a session in the backend or in the smart subsystem SSub may be performed in various ways. According to an embodiment, the backend actualizes the time associated to the session each time the backend is called from the client 302 and/or from a subsystem Sub and/or from a smart subsystem SSub. According to another embodiment, the client 302 only actualizes the time, explicitly, some time before the time expiration.

According to another embodiment, the subsystem Sub may be a service provider that supplies services to the overall system.

According to an embodiment, the system 300 comprises more than one pure network subsystem sub-1. According to an embodiment, the system 300 comprises more than one hybrid subsystem sub-2.

According to an embodiment, the system 300 comprises more than one smart subsystem for a user or a client 302. For example, the system 300 may comprise more than one service gateway for one user / client 302.

The smart subsystem SSub, e.g. the service gateway SG, may have a dynamic or static IP address. For a static IP address, the IP address of the smart subsystem SSub may be stored in the client 302. Hence, the IP-address of the smart subsystem SSub is not necessarily returned to the client. According to an embodiment where the IP address of the smart subsystem SSub is dynamic, the SSub IP address is returned to the client at least each time the client logs into the backend.

The client IP-address may be static or dynamic. For example, for a static client IP address, it may be not necessary to determine the IP address of the client each time the client logs into the backend. For a dynamic client IP address such determination may be performed for each login of the client 302 at the backend.

It should be noted that with regard to Fig. 3, the smart subsystem SSub has been exemplarily described as a service gateway. However, it should be understood, that the above description is also valid and applicable to any smart subsystem which performs itself session management of the services provided by the smart subsystem. For example, the smart subsystem may be a set-top box 350. In this case, the set-top box 350 may contain a set-top box session manager 351.

In order to provide existing components, e.g. an existing backend, existing smart subsystems like service gateways and/or set-top boxes, existing subsystems like service providers etc, with the functionality described herein, respective computer program products may be distributed among the respective interacting components. Such computer program products may be full releases or updates to releases already running on the respective components.

It should be noted that not all possible and/or advantageous combinations of features of the present invention described herein have been explicitly mentioned. However, such combinations are readily apparent at least when taking in conjunction the summary of the invention together with the detailed description of the invention.

It should be noted that the term "comprising" does not exclude other elements or steps and the "a" or "an" does not exclude a plurality. Also elements described in association with different embodiments may be combined. It should also be noted that reference signs in the claims should not be construed as limiting the scope of the claims.

In order to recapitulate the above described embodiments of the present invention one can state:
By providing a distributed access (session) manager solution, involving at least two session managers which upon receiving authentication information of a client by at least one of these session managers generate a client-related service-session ID for each of at least two services accessible by the client. The at least two session managers may e.g. a backend session manger 304 and a service gateway session manger 305. A single login of the client, and hence of the user, is sufficient to access each of these at least two services. Due to the distributed nature of embodiments of the invention, this principle is applicable even for highly distributed systems having several entities that perform session management.

Multiple service-session ID's per session add to the system security - in case one service session ID is compromised, other service session ID's and hence other services are not. The solution allows session management to be distributed over multiple systems, allowing users to connect even if other systems are down. For example, if a connection to the backend middleware is down, a user can still connect locally at tome gateways using local connectivity. The solution allows to provide a flexible embodiments which work with multiple hardware devices, e.g. service gateways, set-top boxes, at home and with middleware components. The solution allows to provide scalable embodiments. The solution allows to integrate seamlessly services of different service providers, with service components spread over multiple subsystems. Further, the solution allows for implementing multiple levels of security e.g. at home gateways, such as opening/closing dynamically a port using a home gateway's firewall.

### List of reference signs:

- 100: service system
- 102: client
- 103, 103a: session manager device
- 104, 104a: session manager
- 106: subsystem
- 108: service
- 109: service execution component
- 110: authentication information
- 111: list of services
- 112: interface
- 114: interface
- 116: service session ID
- 118: interface
- 120: interface
- 122: storage
- 124: user interface
- 125: ID selector
- 126: service request
- 128: interface
- 130: interface
- 132: authentication request
- 134: authentication result
- 136: interface
- 138: interface
- 140: connection
- 142: access granting component
- 200: service system
- 300: service system
- 302: client
- 303: backend
- 304: backend-session manager
- 305: service-gateway-session manager
- 306: subsystem
- 308-1: service
- 308-2: service
- 308-3: service
- 310: authentication information
- 326: user request
- 332: authentication request
- 334: authentication result
- 335: key pass
- 340: connection
- 350: set-top box
- 352: backend-session ID
- 354: backend-service-session ID
- 356: smart-subsystem-session ID
- 358: smart-subsystem-service-session ID
- 360: communication/connection
- 362: firewall

## Claims

1. Method for operating a backend session manager at a backend (303) and a service gateway session manager for authenticating a hybrid service accessible by a client (102, 302),
• wherein, of at least two service components of said hybrid service (308-1), at least one service component is provided by a smart subsystem (ssub) being a service gateway and is managed by the service gateway session manager and at least one other service component is provided by a different subsystem; the method comprising:
• providing authentication information of the client (102, 302) to the backend session manager (304);
• wherein upon login of said client (102, 302) at the backend (303), said backend session manager (304) generates a backend-session ID (352) and a backend-service-session ID (354) for the hybrid service wherein the backend-service-session ID (354) is provided to the different subsystem and to the client wherein the backend session manager (304) further gets an IP address of said client (102, 302) to generate a key pass (335) which is provided to the smart subsystem (ssub),
• wherein said smart subsystem (ssub) performs session management for services that run on it,
• wherein said smart subsystem (ssub) upon reception of said key pass (335) opens a port for said client IP address in its firewall to allow said client (102, 302) to access said smart subsystem (ssub),
• wherein after said login at said backend (303) said client (102, 302) establishes another login (355) to said smart subsystem (ssub),
• wherein the service gateway session manager will then create a SSub-session ID (356) used to authenticate client calls to the smart subsystem (ssub) and a client-related service-session ID (358) for the at least one service component; and will then provide the generated client-related service-session ID (358) to the client (102, 302),
• wherein, upon reception of a request (326) of the client for the hybrid service, the hybrid service (308-1) is authenticated by either said backend (303) in case the request comprises the backend-service-session ID or said smart subsystem (ssub) in case the request comprises the client-related service-session ID (358).

2. The method of claim 1, further comprising:
• providing by one of said at least two operated session managers said IP address of the client (102, 302) to the different subsystem.

3. The method of claim 1 or 2,
• wherein said providing of the backend service-session ID to the different subsystem is upon generation of the backend service-session ID.

4. The method of claim 1 or 2,
• wherein said providing of the backend service-session ID to the different subsystem is upon request by said different subsystem.

5. The method of any of the preceding claims, further comprising using the backend session manager for:
• storing the backend service-session ID (116, 354) in the backend; and,
• upon request of the hybrid service by said client, transferring the backend service-session ID to the different subsystem (106, 306).

6. The method of any of the preceding claims, further comprising using the backend session manager for:
• storing the backend service-session ID (116, 354) in the backend; and,
• upon request of the hybrid service by said client, transferring the backend service-session ID to said client (102, 302).

7. The method of any of the preceding claims, further comprising using the backend session manager for:
• receiving a list of further hybrid services comprising the at least one other service component;
• generating backend service-session ID's for each of said further hybrid services.

8. The method of any of the preceding claims,
• wherein said smart subsystem (ssub) is a set top box.

9. The method of any of the preceding claims,
• wherein said backend (303) is a backend middleware or a middleware component on a telephone operator's infra structure.

10. A distributed session management system comprising:
- a backend including a backend session manager;
- a smart subsystem (ssub);
- a different subsystem (106, 306);
- a service gateway session manager (104, 304, 305) adapted to manage the smart subsystem (ssub);
- a client (102, 302);
the distributed session management system being configured for being operated according to any of claims 1-9, wherein the backend session manager as well as the service gateway session manager (104, 304, 305) comprises:
∘ an input interface (114) for receiving the authentication information of the client (102, 302) ;
and an output interface (118) for outputting the backend service-session ID (116, 354, 358) or the client-related service-session ID, respectively, to said client;
and the client (102, 302) comprises:
∘ an interface (112) for providing the authentication information;
∘ an interface (120) for receiving the backend service-session ID and/or the client-related service-session ID
∘ a user interface (124) allowing a user to select the hybrid service out of accessible hybrid services; and
∘ an ID selector (125) automatically selecting the backend service-session ID and/or the client-related service-session ID.

11. The distributed session management system of claim 10, wherein
• the different subsystem (106, 306) comprises:
∘ a service execution component (109) for providing the at least one other service component (108, 108-1, 308-1, 308-2, 308-3);
∘ an interface (130) for receiving the backend service-session ID and/or the client-related service-session ID ;
∘ an interface (138) for requesting one of the backend session manager and the service gateway session manager to authenticate said received service-session ID (116, 354, 358) of said client;
∘ an interface (138) for receiving an authentication result (134) from said requested session manager (104, 304, 305); and
∘ an access granting component (142) allowing or refusing said client (106, 306) to access the subsystem depending on the authentication result (134).

## Patentansprüche

1. Verfahren zum Betreiben eines Backend-Sitzungsmanagers an einem Backend (303) und eines Dienst-Gateway-Sitzungsmanagers zum Authentifizieren eines Hybriddienstes, auf den ein Client (102, 302) zugreifen kann,
• wobei von mindestens zwei Dienstkomponenten des Hybriddienstes (308-1) mindestens eine Dienstkomponente von einem intelligenten Teilsystem (Smart Subsystem, ssub) bereitgestellt wird, das ein Dienst-Gateway ist und von dem Dienst-Gateway-Sitzungsmanager gemanagt wird, und mindestens eine andere Dienstkomponente von einem anderen Teilsystem bereitgestellt wird; wobei das Verfahren Folgendes umfasst:
• Bereitstellen von Authentifikationsinformationen des Client (102, 302) für den Backend-Sitzungsmanager (304);
• wobei nach Anmeldung des Client (102, 302) an dem Backend (303) der Backend-Sitzungsmanager (304) eine Backend-Sitzungs-ID (352) und eine Backend-Dienstsitzungs-ID (354) für den Hybriddienst erzeugt, wobei die Backend-Dienstsitzungs-ID (354) für das andere Teilsystem und für den Client bereitgestellt wird, wobei der Backend-Sitzungsmanager (304) ferner eine IP-Adresse des Client (102, 302) zum Erzeugen einer Schlüsselkennung (335) bekommt, die für das intelligente Teilsystem (ssub) bereitgestellt wird,
• wobei das intelligente Teilsystem (ssub) ein Sitzungsmanagement für Dienste, die auf ihm laufen, durchführt,
• wobei das intelligente Teilsystem (ssub) nach Empfang der Schlüsselkennung (335) einen Port für die Client-IP-Adresse in seiner Firewall öffnet, um dem Client (102, 302) den Zugriff auf das intelligente Teilsystem (ssub) zu gestatten,
• wobei der Client (102, 302) nach der Anmeldung an dem Backend (303) eine weitere Anmeldung (355) an dem intelligenten Teilsystem (ssub) herstellt,
• wobei der Dienst-Gateway-Sitzungsmanager dann eine SSub-Sitzungs-ID (356), die zum Authentifizieren von Client-Anrufen an das intelligente Teilsystem (ssub) genutzt wird, und eine client-bezogene Dienstsitzungs-ID (358) für die mindestens eine Dienstkomponente erstellen wird und dann die erzeugte client-bezogene Dienstsitzungs-ID (358) für den Client (102, 302) bereitstellen wird,
• wobei der Hybriddienst (308-1) nach Empfang einer Anfrage (326) des Clients nach dem Hybriddienst entweder durch das Backend (303) authentifiziert wird, falls die Anfrage die Backend-Dienstsitzungs-ID umfasst, oder durch das intelligente Teilsystem (ssub), falls die Anfrage die client-bezogene Dienstsitzungs-ID (358) umfasst.

2. Verfahren nach Anspruch 1, ferner umfassend:
• Bereitstellen der IP-Adresse des Client (102, 302) für das andere Teilsystem durch einen der mindestens zwei betriebenen Sitzungsmanager.

3. Verfahren nach Anspruch 1 oder 2,
• wobei das Bereitstellen der Backend-Dienstsitzungs-ID für das andere Teilsystem nach Erzeugung der Backend-Dienstsitzungs-ID erfolgt.

4. Verfahren nach Anspruch 1 oder 2,
• wobei das Bereitstellen der Backend-Dienstsitzungs-ID für das andere Teilsystem auf Anfrage durch das andere Teilsystem erfolgt.

5. Verfahren nach einem der vorhergehenden Ansprüche, ferner das Nutzen des Backend-Sitzungsmanagers für Folgendes umfassend:
• Speichern der Backend-Dienstsitzungs-ID (116, 354) in dem Backend und
• auf Anfrage nach dem Hybriddienst durch den Client Übertragen der Backend-Dienstsitzungs-ID zu dem anderen Teilsystem (106, 306).

6. Verfahren nach einem der vorhergehenden Ansprüche, ferner das Nutzen des Backend-Sitzungsmanagers für Folgendes umfassend:
• Speichern der Backend-Dienstsitzungs-ID (116, 354) in dem Backend und
• auf Anfrage nach dem Hybriddienst durch den Client Übertragen der Backend-Dienstsitzungs-ID zu dem Client (102, 302).

7. Verfahren nach einem der vorhergehenden Ansprüche, ferner das Nutzen des Backend-Sitzungsmanagers für Folgendes umfassend:
• Empfangen einer Liste weiterer Hybriddienste, die die mindestens eine andere Dienstkomponente umfasst;
• Erzeugen von Backend-Dienstsitzungs-IDs für jeden der weiteren Hybriddienste.

8. Verfahren nach einem der vorhergehenden Ansprüche,
• wobei das intelligente Teilsystem (ssub) eine Set-Top-Box ist.

9. Verfahren nach einem der vorhergehenden Ansprüche,
• wobei das Backend (303) eine Backend-Middleware oder eine Middleware-Komponente an einer Telefonanbieter-Infrastruktur ist.

10. Verteiltes Sitzungsmanagementsystem, umfassend:
- ein Backend, das einen Backend-Sitzungsmanager enthält;
- ein intelligentes Teilsystem (ssub);
- ein anderes Teilsystem (106, 306);
- einen Dienst-Gateway-Sitzungsmanager (104, 304, 305), der dafür eingerichtet ist, das intelligente Teilsystem (ssub) zu managen;
- einen Client (102, 302);
wobei das verteilte Sitzungsmanagementsystem dafür konfiguriert ist, nach einem der Ansprüche 1 bis 9 betrieben zu werden, wobei der Backend-Sitzungsmanager sowie der Dienst-Gateway-Sitzungsmanager (104, 304, 305) Folgendes umfassen:
∘ eine Eingabeschnittstelle (114) zum Empfangen von Authentifikationsinformationen des Client (102, 302)
∘ und eine Ausgabeschnittstelle (118) zum Ausgeben der Backend-Dienstsitzungs-ID (116, 354, 358) beziehungsweise der client-bezogenen Dienstsitzungs-ID an den Client;
und der Client (102, 302) Folgendes umfasst:
∘ eine Schnittstelle (112) zum Bereitstellen der Authentifikationsinformationen;
∘ eine Schnittstelle (120) zum Empfangen der Backend-Dienstsitzungs-ID und/oder der client-bezogenen Dienstsitzungs-ID
∘ eine Nutzerschnittstelle (124), die es einem Nutzer gestattet, den Hybriddienst aus Hybriddiensten, auf die zugegriffen werden kann, auszuwählen; und
∘ einen ID-Selektor (125), der automatisch die Backend-Dienstsitzungs-ID und/oder die client-bezogene Dienstsitzungs-ID auswählt.

11. Verteiltes Sitzungsmanagementsystem nach Anspruch 10, wobei
• das andere Teilsystem (106, 306) Folgendes umfasst:
∘ eine Dienstausführungskomponente (109) zum Bereitstellen der mindestens einen anderen Dienstkomponente (108, 108-1, 308-1, 308-2, 308-3);
∘ eine Schnittstelle (130) zum Empfangen der Backend-Dienstsitzungs-ID und/oder der client-bezogenen Dienstsitzungs-ID;
∘ eine Schnittstelle (138) zum Anfragen des Backend-Sitzungsmanagers oder des Dienst-Gateway-Sitzungsmanagers, die empfangene Dienstsitzungs-ID (116, 354, 358) des Client zu authentifizieren;
∘ eine Schnittstelle (138) zum Empfangen eines Authentifikationsergebnisses (134) von dem angefragten Sitzungsmanager (104, 304, 305) und
∘ eine Zugriff gewährende Komponente (142), die dem Client (106, 306) den Zugriff zu dem Teilsystem in Abhängigkeit von dem Authentifikationsergebnis (134) gewährt oder verweigert.

## Revendications

1. Un procédé d'actionnement d'un gestionnaire de sessions dorsales au niveau d'un système dorsal (303) et d'un gestionnaire de sessions de passerelle de service destiné à l'authentification d'un service hybride accessible par un client (102, 302),
• dans lequel, parmi au moins deux composants de service dudit service hybride (308-1), au moins un composant de service est fourni par un sous-système intelligent (ssub) qui est une passerelle de service et est géré par le gestionnaire de sessions de passerelle de service et au moins un autre composant de service est fourni par un sous-système différent, le procédé comprenant :
• la fourniture d'informations d'authentification du client (102, 302) au gestionnaire de sessions dorsales (304),
• dans lequel, après la connexion dudit client (102, 302) au système dorsal (303), ledit gestionnaire de sessions dorsales (304) génère un identifiant de session dorsale (352) et un identifiant de session de service dorsale (354) destinés au service hybride, l'identifiant de session de service dorsale (354) étant fourni au sous-système différent et au client, le gestionnaire de sessions dorsales (304) obtenant en outre une adresse IP dudit client (102, 302) de façon à générer un passe (335) qui est fourni au sous-système intelligent (ssub),
• dans lequel ledit sous-système intelligent (ssub) exécute une gestion de sessions destinée à des services qui sont exécutés sur celui-ci,
• dans lequel ledit sous-système intelligent (ssub), après réception dudit passe (335), ouvre un port destiné à ladite adresse IP client dans son pare-feu de façon à permettre audit client (102, 302) d'accéder audit sous-système intelligent (ssub),
• dans lequel, après ladite connexion audit système dorsal (303), ledit client (102, 302) établit une autre connexion (355) audit sous-système intelligent (ssub),
• dans lequel le gestionnaire de sessions de passerelle de service créera ensuite un identifiant de sous-session (356) utilisé de façon à authentifier des appels de client au sous-système intelligent (ssub) et un identifiant de session de service relatif à un client (358) destiné au au moins un composant de service, et fournira ensuite l'identifiant de session de service relatif à un client (358) généré au client (102, 302),
• dans lequel, après réception d'une demande (326) du client pour le service hybride, le service hybride (308-1) est authentifié par soit ledit système dorsal (303) dans le cas où la demande comprend l'identifiant de session de service dorsale ou ledit sous-système intelligent (ssub) dans le cas où la demande comprend l'identifiant de session de service relatif à un client (358).

2. Le procédé selon la revendication 1, comprenant en outre :
• la fourniture par un desdits au moins deux gestionnaires de sessions actionnés de ladite adresse IP du client (102, 302) au sous-système différent.

3. Le procédé selon la revendication 1 ou 2,
• dans lequel ladite fourniture de l'identifiant de session de service dorsale au sous-système différent s'effectue après la génération de l'identifiant de session de service dorsale.

4. Le procédé selon la revendication 1 ou 2,
• dans lequel ladite fourniture de l'identifiant de session de service dorsale au sous-système différent s'effectue après une demande par ledit sous-système différent.

5. Le procédé selon l'une quelconque des revendications précédentes, comprenant en outre l'utilisation du gestionnaire de sessions dorsales pour :
• la conservation en mémoire de l'identifiant de session de service dorsale (116, 354) dans le système dorsal, et,
• après la demande du service hybride par ledit client, le transfert de l'identifiant de session de service dorsale au sous-système différent (106, 306).

6. Le procédé selon l'une quelconque des revendications précédentes, comprenant en outre l'utilisation du gestionnaire de sessions dorsales pour :
• la conservation en mémoire de l'identifiant de session de service dorsale (116, 354) dans le système dorsal, et,
• après la demande du service hybride par ledit client, le transfert de l'identifiant de session de service dorsale audit client (102, 302).

7. Le procédé selon l'une quelconque des revendications précédentes, comprenant en outre l'utilisation du gestionnaire de sessions dorsales pour :
• la réception d'une liste d'autres services hybrides comprenant le au moins un autre composant de service,
• la génération d'identifiants de sessions de service dorsales pour chacun desdits autres services hybrides.

8. Le procédé selon l'une quelconque des revendications précédentes,
• dans lequel ledit sous-système intelligent (ssub) est un décodeur.

9. Le procédé selon l'une quelconque des revendications précédentes,
• dans lequel ledit système dorsal (303) est un intergiciel dorsal ou un composant d'intergiciel sur une infrastructure d'opérateur téléphonique.

10. Un système de gestion de sessions réparti comprenant :
- un système dorsal comprenant un gestionnaire de sessions dorsales,
- un sous-système intelligent (ssub),
- un sous-système différent (106, 306),
- un gestionnaire de sessions de passerelle de service (104, 304, 305) adapté de façon à gérer le sous-système intelligent (ssub),
- un client (102, 302),
le système de gestion de sessions réparti étant configuré de façon à être actionné selon l'une quelconque des revendications 1 à 9,
dans lequel le gestionnaire de sessions dorsales ainsi que le gestionnaire de sessions de passerelle de service (104, 304, 305) comprend :
∘ une interface d'entrée (114) destinée à la réception des informations d'authentification du client (102, 302),
et une interface de sortie (118) destinée à la production en sortie de l'identifiant de session de service dorsale (116, 354, 358) ou de l'identifiant de session de service relatif à un client, respectivement, vers ledit client,
et le client (102, 302) comprend :
∘ une interface (112) destinée à la fourniture des informations d'authentification,
∘ une interface (120) destinée à la réception de l'identifiant de session de service dorsale et/ou de l'identifiant de session de service relatif à un client
∘ une interface utilisateur (124) permettant à un utilisateur de sélectionner le service hybride parmi des services hybrides accessibles, et
∘ un sélecteur d'identifiant (125) qui sélectionne automatiquement l'identifiant de session de service dorsale et/ou l'identifiant de session de service relatif à un client.

11. Le système de gestion de sessions réparti selon la revendication 10, dans lequel
• le sous-système différent (106, 306) comprend :
∘ un composant d'exécution de service (109) destiné à la fourniture du au moins un autre composant de service (108, 108-1, 308-1, 308-2, 308-3),
∘ une interface (130) destinée à la réception de l'identifiant de session de service dorsale et/ou de l'identifiant de session de service relatif à un client ,
∘ une interface (138) destinée à demander à un gestionnaire parmi le gestionnaire de sessions dorsales et le gestionnaire de sessions de passerelle de service d'authentifier ledit identifiant de session de service reçu (116, 354, 358) dudit client,
∘ une interface (138) destinée à la réception d'un résultat d'authentification (134) à partir dudit gestionnaire de sessions sollicité (104, 304, 305), et
∘ un composant d'octroi d'accès (142) qui autorise ou refuse audit client (106, 306) un accès au sous-système en fonction du résultat d'authentification (134).
